# EUROPEAN PATENT SPECIFICATION

(11) **EP 0 448 173 B1**
(45) Date of publication and mention of the grant of the patent: **03.06.1998**
(21) Application number: 91200611.1
(22) Date of filing: 20.03.1991
(51) Int. Cl.: G02F 1/137

(54) **Liquid crystal display device**
Flüssigkristall-Wiedergabeanordnung
Dispositif d'affichage à cristal liquide

(30) Priority: 23.03.1990 NL 9000686
(43) Date of publication of application: 25.09.1991
(73) Proprietor: Philips Electronics N.V., 5621 BA Eindhoven (NL)
(72) Inventor: Mulkens, Johannes Catharina Hubertus, NL-5656 AA Eindhoven (NL); Heynderickx, Ingrid Emilienne Joanna Rita, NL-5656 AA Eindhoven (NL)
(74) Representative: Raap, Adriaan Yde

(56) References cited:
- EP-A- 0 264 667
- US-A- 4 039 252
- JOURNAL OF APPLIED PHYSICS, vol. 48, no. 4, April 1977, pages 1426-1431, American Institute of Physics; M. GOSCIANSKI: "Optical characteristics of twisted nematic liquid crystals: Application to the improvement of the scanning capability in matrix displays"

## Description

The invention relates to a liquid crystal display device according to the introductory part of Claim 1.

Such a device can be used, for example, in LCD television, but also in datagraphic display devices.

A device of the above-mentioned type is described, for example, in EP-A 0,264,667. This application describes how liquid crystal material having a smaller twist angle ϕ_{T}, for example, between 10° and 80° for adjusting grey scales is preferred to material having large twist angles (90° or more) which are suitable for high multiplex ratios. At low values of d. Δ n (d: thickness of the layer of liquid crystal material, Δn: birefringence or optical anisotropy) and suitably chosen states of polarization, such a device provides a good contrast and little discoloration.

A drawback occurring notably in the case of a twist angle of 90° or more is the fact that the contrast in crossed polarizers is angle-dependent around the normal on a front face of the display device and is considerably lower in one quadrant. Moreover, when changing the viewing angle, picture inversion occurs in the quadrant where the highest contrast is obtained due to the specific shape of the transmission/voltage characteristic in the associated viewing direction.

The present invention has for its object to provide a picture display device of the type described in the opening paragraph which does not have said picture inversion. Such a device is characterized according to the characterizing part of Claim 1.

ϕ_{T} is preferably chosen to be between 70° and 85°. Lower values of ϕ_{T} lead to a gradual transmission/voltage characteristic curve so that excessively high drive voltages are required. Due to the chosen value of α there will be a greater contrast at a given ϕT and at the same drive voltages, while the color neutrality is substantially maintained.

Optimum results are obtained when a value of between 0.4 and 0.8 is chosen for the optical path length d.Δn/λ (d: thickness of the liquid crystal layer, Δn: birefringence, λ: wavelength of the light used).

A liquid crystal cell of said parameters is particularly suitable for the so-called active drive mode. A display device suitable for this purpose is characterized in that it further comprises a cross-bar system of rows and columns with switches at the area of the crossings, via which switches voltages are applied to the electrodes.

Various aspects of the invention will now be described in greater detail with reference to an embodiment and the drawing.

Fig. 1 shows diagrammatically iso-contrast curves for a liquid crystal display device with ϕT= 90°.

Fig. 2 shows two associated transmission/voltage characteristic curves.

Fig. 3 shows some forms of the relationship between the directions of orientation and the directions of polarization P.

Fig. 4 shows two transmission/voltage characteristic curves of a device according to the invention.

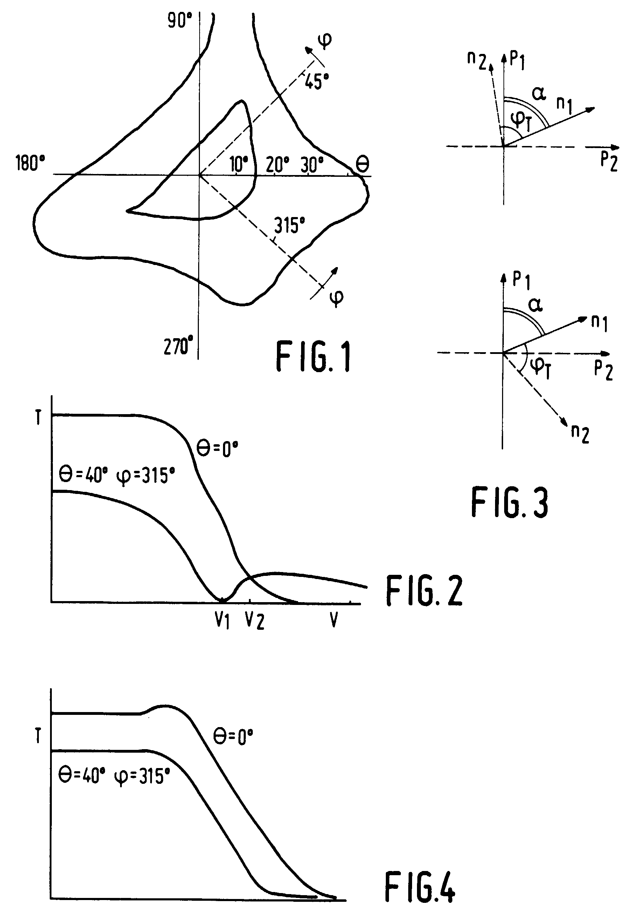

Fig. 1 shows two iso-contrast curves for a liquid crystal display device with ϕT 90° and d.Δn = 0.48 µm. As is apparent from the Figure, these are non-rotationally symmetrical while the highest contrast values occur in practice in the fourth quadrant (270 < ϕ < 360^{o}) i.e. the quadrant in which the viewing direction is located along the director in the centre of the cell. However, in this quadrant the transmission/voltage characteristic curve exhibits an angle-dependent behaviour as is further shown in Fig. 2. This Figure shows two transmission/voltage characteristic curves, namely one in a direction perpendicular to the liquid crystal layer and one in the fourth quadrant (ϕ = 315°) at an angle of θ with respect to the normal (θ = 40°). It is apparent from Fig. 2 that, for example, at the voltage value V₁ a dark or a grey image is observed, dependent on the angle θ. However, for a voltage V > V₂ the transmission change, with a variation in θ, proceeds the other way around. Consequently a change of the viewing angle leads to grey scale inversion in this case. More generally, grey scale inversion is observed whenever a transmission/voltage characteristic curve has a dip in the low transmissive portion with respect to the transmission/voltage characteristic for which the grey scales are defined. Contrast changes also occur.

In a display device according to the invention this problem is solved by suitable choices (see Fig. 3) of the twist angle ϕ*T* and the angle α between the direction of polarization P₁ on the front face of the device and the direction of orientation n₁ of the liquid crystal molecules at the area of this front face. P₂ and n₂ represent the direction of polarization and the direction of orientation at the area of the rear face. The directions n₁ and n₂ define the twist angle ϕ*T*. P₁ and P₂ are chosen to be perpendicular with respect to each other.

Such a device yields the transmission/voltage characteristic curve of Fig. 4 for ϕ*T* = 70° and d.Δn = 0.49 µm for different viewing angles. Since the two curves do not exhibit a dip, the problems as described with reference to Fig. 2 no longer occur.

The value of d.Δn/λ may vary between 0.40 and 0.80 dependent on ϕ*T* without the achieved advantages being lost, while also a good color neutrality is maintained. In this case λ is dependent on the use. In the case of irradiation with monochrome light, as in projection applications with three light sources, the peak wavelength of the used light is preferably chosen. In the case of irradiation with white light, an average wavelength is chosen.

## Claims

1. A liquid crystal display device comprising a layer of liquid crystalline material between two substrates, the substrates each being provided with electrodes and orientation means in contact with the liquid crystal material giving the liquid crystalline molecules first and second directions of orientation such that the liquid crystalline material has a twist angle of value ϕ_{T} across the thickness of the layer, said device further comprising polarizers at opposite sides of the layer of liquid crystalline material having directions of polarization which cross each other substantially perpendicularly, characterized in that the twist angle has a given value 60° < ϕ_{T} < 90° and the angle between the direction of orientation provided by the orientation means one of the substrates is provided with and the direction of polarization of the polarizer at the same side of the layer of liquid crystalline material as said orientation means has a value α in the range 30°+ ϕ_{T}/2 < α < 60° + ϕ_{T}/2, wherein ϕ_{T} is the given value of the twist angle.

2. A liquid crystal display device as claimed in Claim 1, characterized in that 70° < ϕ_{T} < 85°.

3. A liquid crystal display device as claimed in Claim 1 or 2, characterized in that it holds for the product of the thickness d of the liquid crystal layer and the birefringence Δn that: 0.4 < d.Δn/λ < 0.8, in which λ is either the peak wavelength of a substantially monochrome light source associated with the display device or the average wavelength of a light source associated with the device.

4. A liquid crystal display device as claimed in Claim 1,2 or 3, characterized in that it further comprises a cross-bar system of rows and columns with switches at the area of the crossings, via which switches voltages are applied to the electrodes.

## Patentansprüche

1. Flüssigkristall-Wiedergabeanordnung mit einer Flüssigkristall-Materialschicht zwischen zwei Substraten mit Elektroden und Orientierungsschichten, die den Flüssigkristallmolekülen an der Stelle der Substrate eine derartige Vorzugsrichtung erteilen, daß das Flüssigkristall-Material über die Dicke der Schicht einen Drallwinkel ϕ_{T} aufwist, wobei diese Wiedergabeanordnung weiterhin auf beiden Seiten der Flüssigkristall-Materialschicht mit zueinander nahezu senkrechten Polarisatoren versehen ist, dadurch gekennzeichnet, daß der Drallwinkel einen bestimmten Wert hat 60° < ϕ < 90° und daß der Winkel zwischen der von den Orientierungsmitteln eines der Substrate geschaffenen Orientierungsrichtung und der Polarisationsrichtung des Polarisators auf derselben Seite der Flüssigkristall-Materialschicht wie die Orientierungsmittel einen Wert α hat im Bereich von 30° + ϕ_{T}/2 < α < 60° + ϕ_{T}/2, wobei ϕ_{T} der bestimmte Wert des Drallwinkels ist.

2. Flüssigkristall-Wiedergabeanordnung nach Anspruch 1, dadurch gekennzeichnet, daß 70° < ϕ_{T} < 85° ist.

3. Flüssigkristall-Wiedergabeanordnung nach Anspruch 1 oder 2, dadurch gekennzeichnet, daß für das Produk aus der Dicke d der der Flüssigkristall-Materialschicht und der Doppelbrechung Δn gilt: 0,4 < d.Δn/λ < 0,8, wobei λ entweder die Spitzenwellenlänge einer zu der Wiedergabeanordnung gehörenden nahezu monochromen Lichtquelle, oder die mittlere Wellenlänge einer zu der Wiedergabeanordnung gehörenden Lichtquelle ist.

4. Flüssigkristall-Wiedergabeanordnung nach Anspruch 1, 2 oder 3, dadurch gekennzeichnet, daß diese weiterhin ein Kreuzstangensystem von Reihen und Spalten aufweist, wobei sich an den Kreuzungen Schalter befinden, über die den Elektroden Spannungen zugeführt werden.

## Revendications

1. Dispositif d'affichage à cristaux liquides comprenant une couche de cristaux liquides entre deux substrats, chacun d'eux disposant d'électrodes et de moyens d'orientation en contact avec les cristaux liquides pour donner aux molécules de cristaux liquides des première et deuxième directions d'orientation afin que les cristaux liquides aient un angle de torsion de valeur ϕ_{T} à travers l'épaisseur de la couche, ledit dispositif comprenant par ailleurs des polariseurs sur les faces opposées de la couche de cristaux liquides dont les directions de polarisation sont en substance perpendiculaires entre elles; caractérisé en ce que l'angle de torsion a une valeur donnée telle que 60° < ϕ_{T} < 90° et l'angle entre la direction d'orientation fournie par les moyens d'orientation d'un des substrats et la direction de polarisation du polariseur situé du même côté de la couche de cristaux liquides que lesdits moyens d'orientation a une valeur α telle que 30° + ϕ_{T/2} < α < 60° + ϕ_{T/2}, où ϕ_{T} est la valeur donnée de l'angle de torsion.

2. Dispositif d'affichage à cristaux liquides selon la revendication 1, caractérisé en ce que 70° < ϕ_{T} < 85°.

3. Dispositif d'affichage à cristaux liquides selon la revendication 1 ou 2, caractérisé en ce que le produit de l'épaisseur d de la couche de cristaux liquides et de la biréfringence Δn est tel que 0,4 < d.Δn/X < 0,8, où λ est soit la longueur d'onde maximale d'une source de lumière principalement monochrome associée au dispositif d'affichage, soit la longueur d'onde moyenne d'une source de lumière associée au dispositif.

4. Dispositif d'affichage à cristaux liquides selon la revendication 1, 2 ou 3, caractérisé en ce qu'il comprend également un système de colonnes et de rangées entrecroisées avec des interrupteurs dans la zone des intersections, à travers lesquels les tensions sont appliquées aux électrodes.
